# EUROPÄISCHE PATENTSCHRIFT

(11) **EP 4 311 798 B1**
(45) Veröffentlichungstag und Bekanntmachung des Hinweises auf die Patenterteilung: **26.11.2025**
(21) Anmeldenummer: 23186313.5
(22) Anmeldetag: 19.07.2023
(51) Int. Cl.: B65G 47/84

(54) **VORRICHTUNG ZUM TRANSPORT VON BEHÄLTERN, ANLAGE UMFASSEND DIE VORRICHTUNG UND VERFAHREN ZUM VERSTELLEN EINER TRÄGERSTRUKTUR DER VORRICHTUNG**
DEVICE FOR TRANSPORTING CONTAINERS, SYSTEM COMPRISING THE DEVICE AND METHOD FOR ADJUSTING A SUPPORT STRUCTURE OF THE DEVICE
DISPOSITIF DE TRANSPORT DE RÉCIPIENTS, INSTALLATION COMPRENANT LE DISPOSITIF ET PROCÉDÉ DE RÉGLAGE D'UNE STRUCTURE DE SUPPORT DU DISPOSITIF

(30) Priorität: 26.07.2022 DE 102022118618
(43) Veröffentlichungstag der Anmeldung: 31.01.2024
(73) Patentinhaber: KHS GmbH, 44143 Dortmund (DE)
(72) Erfinder: Fahldieck, Andreas, 55743 Idar-Oberstein (DE); Schug, Nils, 55499 Riesweiler (DE)

(56) Entgegenhaltungen:
- WO-A1-2021/165072
- JP-A- 2016 064 840
- US-B2- 9 302 856

## Beschreibung

Die Erfindung betrifft eine Vorrichtung zum Transport von Behältern, eine Anlage umfassend die Vorrichtung und ein Verfahren zum Verstellen einer Trägerstruktur der Vorrichtung.

Zum Transport von Behältern werden Vorrichtungen verwendet, bei denen die Behälter aufrecht transportiert werden können, insbesondere nach dem Befüllen und vor dem Verschließen der Behälter. Die Vorrichtungen zum Transport von Behältern weisen dazu mindestens eine Trägerstruktur auf, die mindestens einen Behälter greifen und/oder halten kann. Bei Produktwechseln, bei denen die Art der Behälter gewechselt wird, kann die Höhe der neu herzustellenden Behälter verschieden zu den vorher hergestellten Behältern sein. Insbesondere, wenn die Vorrichtung die Behälter in zwei verschiedenen Höhen greift, ist eine Höhenanpassung notwendig, um den Abstand der beiden Greifhöhen an die neue Höhe anzupassen.

Um die Vorrichtung zum Transport von Behältern auf die Höhe der Behälter einstellen zu können, ist aus WO 2021/165072 A1 eine Vorrichtung zum rotativen Transport von Behältern bekannt, bei denen zwei übereinander angeordnete um eine gemeinsame Achse rotierende Trägerelemente mittels mehrerer Spindeltriebe relativ zueinander verstellt werden können. Die Spindeltriebe rotieren mit der Vorrichtung mit und weisen jeweils ein Zahnrad auf, wobei alle Zahnräder in einen Zahnkranz eingreifen, der sich um die gemeinsame Achse erstreckt. Zum Antreiben der Spindeltriebe kann der Zahnkranz arretiert werden, so dass er nicht mit der Vorrichtung rotiert. Eine Drehung der Vorrichtung mit den Spindeltrieben bewirkt dann eine relative Verstellung der Trägerelemente zueinander.

Weiterhin beschreibt JP 2016 064840 A eine Fördervorrichtung für Harzflaschen, bei der eine Greifeinheit und eine Dreheinheit drehbar an einer gemeinsamen Achse gelagert sind und die Höhenposition der Greifeinheit mittels Höheneinstellmechanismus relativ zur Dreheinheit verstellt werden kann. Dabei wird durch einen Luftkanal Druckluft in eine Luftkammer zugeführt, wodurch sich ein Abstand zwischen Dreh- und Greifeinheit verändert. Der Abstand kann mit um eine weiter Achse drehbar gelagerten Hebeln verändert werden, mit denen ein scheibenförmiges Höheneinstellungselement mit unterschiedlich hohen Plattenabschnitten in verschiedenen Positionen gedreht werden kann. Dabei werden über die Höhe der Plattenabschnitte Höhenpositionen der Greifeinheit eingestellt. Zum Betätigen der Hebel wird ein Schwenkarm in einen Weg, den die Hebel bei einer Drehung der Dreheinheit überstreichen, eingeschwenkt. Die Höhenposition wird in einer Kopplungsstellung festgesetzt, indem der Schwenkarm aus dem Weg, den die Hebel bei einer Drehung der Dreheinheit überstreichen rausgeschwenkt wird. Die Greifeinheit wird dann wieder auf die Dreheinheit abgesenkt, wobei das Höhenverstellelement die Greifeinheit und die Dreheinheit in dem neu eingestellten Abstand hält. Die Merkmale des Oberbegriffs des Anspruchs 1 sind aus JP 2016 064840 A bekannt.

Aufgabe der Erfindung ist es, eine Vorrichtung zum Transport bereitzustellen, die eine vereinfachte Wartung und/oder Reinigung erlaubt.

Diese Aufgabe wird erfindungsgemäß gelöst durch eine Vorrichtung mit den Merkmalen des Anspruchs 1. Vorteilhafte Weiterbildungen sind Gegenstand der abhängigen Ansprüche sowie der folgenden Beschreibung.

Die Erfindung betrifft eine Vorrichtung zum Transport von Behältern, umfassend eine Basiseinheit und eine Dreheinheit, die an der Basiseinheit um eine erste Achse drehbar gelagert ist, wobei die Dreheinheit mindestens eine Trägerstruktur für Behälter und mindestens eine Verstelleinrichtung zum Verstellen einer Position der Trägerstruktur parallel zur ersten Achse umfasst und die Vorrichtung mindestens eine Antriebseinrichtung für die Verstelleinrichtung aufweist. Erfindungsgemäß ist vorgesehen ist, dass die Dreheinheit bei der Drehung um die erste Achse mindestens eine Kopplungsstellung aufweist, in der die Antriebseinrichtung an die Verstelleinrichtung koppelbar ist, wobei die Antriebseinrichtung ein erstes Getriebeelement zum Antreiben der Verstelleinrichtung durch eine Drehung um eine zweite Achse aufweist, wobei das erste Getriebeelement bei dieser Drehung mindestens eine Freigabestellung umfasst, in der das erste Getriebeelement bei einer Drehung der Dreheinheit um die erste Achse kollisionsfrei zu der Verstelleinrichtung angeordnet ist, und wobei das erste Getriebeelement in der Kopplungsstellung der Dreheinheit, außerhalb der Freigabestellung zum Antreiben der Verstelleinrichtung an die Verstelleinrichtung gekoppelt ist.

Gemäß der Erfindung wird die Freigabe bzw. die Kopplung der Verstelleinrichtung mit der Antriebseinrichtung durch eine Drehung des ersten Getriebeelements um die zweite Achse bewirkt. Weiter bewirkt die Drehung des ersten Getriebeelements um diese zweite Achse auch den Antrieb der Verstelleinrichtung, wenn die Dreheinheit in der Kopplungsstellung ist. In der Freigabestellung des ersten Getriebeelements kann die Dreheinheit ohne Kollision mit der Antriebseinrichtung beispielsweise durch einen Antriebsmotor um die erste Achse um die Basiseinheit gedreht werden. D. h., dass das erste Getriebeelement in der Freigabestellung nicht mit der Verstelleinrichtung gekoppelt ist. Kollisionsfrei ist dabei mit entkoppelt gleichzusetzen. Dabei ragt das erste Getriebeelement in der Freigabestellung nicht die Bahn, die die Verstelleinrichtung und die weiteren Komponenten der Dreheinheit bei der Drehung um die erste Achse überstreichen. In der Freigabestellung kann die Antriebseinrichtung daher die Verstelleinrichtung nicht antreiben. Während die Dreheinheit um die erste Achse gedreht wird, bleibt das erste Getriebeelement in der Freigabestellung. Um eine Verstellung der Position der Trägerstruktur zu bewirken, wird die Dreheinheit in die Kopplungsstellung gedreht. Weiter kann die Dreheinheit in der Kopplungsstellung arretiert werden. Die Trägerstruktur kann z. B. ein Trägerring, insbesondere ein Transportstern oder ein Standring für Behälter, sein. In der Kopplungsstellung ist die Antriebseinrichtung mit der Verstelleinrichtung koppelbar, wobei das erste Getriebeelement dann bei einer Drehung um die zweite Achse aus der Freigabestellung heraus an die Verstelleinrichtung gekoppelt werden kann. Während das erste Getriebeelement an die Verstelleinrichtung gekoppelt ist und um die zweite Achse gedreht wird, treibt das erste Getriebeelement die Verstelleinrichtung an. Sobald die gewünschte Position der Trägerstruktur parallel zur ersten Achse erreicht wurde, um die Vorrichtung an die Höhe der herzustellenden Behälter anzupassen, wird das erste Getriebeelement in der Freigabestellung gestoppt. Damit wird die Antriebseinrichtung von der Verstelleinrichtung entkoppelt, so dass das erste Getriebeelement bei einer Drehung der Dreheinheit um die erste Achse kollisionsfrei zu der Verstelleinrichtung angeordnet ist. Die Dreheinheit kann dann gedreht werden, ohne dass eine Kollision zwischen der Verstelleinrichtung und dem ersten Getriebeelement erfolgt. Da die Überführung in und aus der Freigabestellung sowie der Antrieb der Verstelleinrichtung lediglich über eine Drehung des ersten Getriebeelemente um die zweite Achse erfolgt, werden keine schwer zu reinigenden Linearführungen oder Arretierkomponenten benötigt. Damit stellt die Erfindung eine verbesserte Vorrichtung zum Transport bereit, die eine vereinfachte Wartung und/oder Reinigung erlaubt.

In einem Ausführungsbeispiel kann die zweite Achse beispielsweise verschieden zu der ersten Achse sein. Alternativ kann die zweite Achse z. B. auf der ersten Achse angeordnet sein.

Unter dem Begriff Behälter können auch Vorformlinge (Preforms) für die Herstellung von Flaschen verstanden werden. Die Vorformlinge können dann pneumatisch oder hydraulisch zu Flaschen gereckt werden.

Einem Ausführungsbeispiel gemäß kann die Antriebseinrichtung in Bezug zur Basiseinheit ortsfest angeordnet sein.

Bei einer Drehung der Dreheinheit um die Basiseinheit verbleibt die Antriebseinrichtung ortsfest, d. h., dass die Antriebseinrichtung nicht mit der Dreheinheit um die erste Achse rotiert. Die Antriebseinrichtung kann z. B. an der Basiseinheit befestigt sein oder an dem Boden, auf dem die Basiseinheit angeordnet ist, befestigt sein. Da die Antriebseinrichtung nicht mit der Dreheinheit rotiert, werden keine Dreheinführungen für Kabel oder Schläuche zum Betrieb der Antriebseinrichtung benötigt.

Einem weiteren Ausführungsbeispiel gemäß kann die Verstelleinrichtung ein zweites Getriebeelement zum Verstellen der mindestens einen Trägerstruktur aufweisen, wobei das erste Getriebeelement in der Kopplungsstellung der Dreheinheit an das zweite Getriebeelement koppelbar ist und in der Freigabestellung bei einer Drehung der Dreheinheit um die erste Achse kollisionsfrei zu dem zweiten Getriebeelement angeordnet ist.

Das erste Getriebeelement kann in der Kopplungsstellung der Dreheinheit ausgehend von der Freigabestellung durch eine Drehung um die zweite Achse mit dem zweiten Getriebeelement gekoppelt werden.

Weiter ist gemäß einem Ausführungsbeispiel denkbar, dass das erste Getriebeelement bezogen auf die erste Achse radial weiter innen als die Verstelleinrichtung angeordnet sein kann. In diesem Ausführungsbeispiel kann auch die Antriebseinrichtung insgesamt radial weiter innen als die Verstelleinrichtung angeordnet sein. Damit kann die Vorrichtung kompakt aufgebaut werden.

Einem anderen Ausführungsbeispiel gemäß kann das erste Getriebeelement bezogen auf die erste Achse radial weiter außen als die Verstelleinrichtung angeordnet sein. In diesem Ausführungsbeispiel kann auch die Antriebseinrichtung insgesamt radial weiter außen als die Verstelleinrichtung angeordnet sein. Damit kann Wartung der Vorrichtung weiter vereinfacht werden.

Weiter kann das erste Getriebeelement gemäß einem weiteren Ausführungsbeispiel mindestens eine Kopplungskomponente zum Koppeln an die Verstelleinrichtung aufweisen, wobei sich die Kopplungskomponente von dem ersten Getriebeelement weg erstreckt.

Die Kopplungskomponente kann z. B. ein Zahn oder ein Finger/Bolzen sein, wobei die Antriebseinrichtung als Triebstockantrieb ausgebildet sein kann. Die Verstelleinrichtung weist in diesem Ausführungsbeispiel entsprechende Gegenelement für die Kopplungskomponente auf, die außerhalb der Freigabestellung und in der Kopplungsstellung der Dreheinheit mit der Kopplungskomponente koppeln können, um Kraft zwischen dem ersten Getriebeelement und der Verstelleinrichtung übertragen zu können. In diesem Ausführungsbeispiel ist das erste Getriebeelement in der Freigabestellung, wenn keine Kopplungskomponente in die Verstelleinrichtung eingreift und außerhalb einer Bahn der Verstelleinrichtung angeordnet ist, die sie bei einer Drehung um die erste Achse überstreicht.

Das zweite Getriebeelement kann als drehbares Rad ausgebildet sein, das entlang eines Umfangs eine Vielzahl von Aufnahmen aufweist, wobei das Kopplungselement ein Eingriffsbolzen zum Eingreifen in die Aufnahmen sein kann.

Einem weiteren Ausführungsbeispiel gemäß kann das erste Getriebeelement mindestens zwei Kopplungskomponenten aufweisen, wobei bei einer Drehung der Dreheinheit um die erste Achse alle Kopplungskomponenten in der mindestens einen Freigabestellung kollisionsfrei zu der Verstelleinrichtung angeordnet sind.

Die mindestens zwei Kopplungskomponenten können vorzugsweise gleichmäßig über einen Umfang um die zweite Achse verteilt sein.

Das erste Getriebeelement kann gemäß einem anderen Ausführungsbeispiel als Teilzahnrad ausgebildet sein, wobei die mindestens eine Kopplungskomponente als Zahn des Teilzahnrads ausbildet ist, oder wobei das erste Getriebeelement als drehbarer Arm ausgebildet ist, wobei ein Endstück des Arms an der zweiten Achse angeordnet ist und das gegenüberliegende Endstück des Arms die Kopplungskomponente aufweist.

Das Teilzahnrad kann z. B. eine Ausnehmung aufweisen. In der Freigabestellung kann Ausnehmung zu der Verstelleinrichtung gedreht sein, so dass die Verstelleinrichtung bei einer Drehung um die erste Achse nicht mit dem Teilzahnrad kollidiert. Bei einer Drehung des Teilzahnrads ausgehend von der Freigabestellung um die zweite Achse kann das Teilzahnrad an die Verstelleinrichtung koppeln.

Der mindestens eine drehbare Arm kann sich radial von der zweiten Achse weg erstrecken, so dass die Kopplungskomponente bei einer Drehung des Arms um die zweite Achse in einer Kreisbahn um die zweite Achse bewegt wird.

In einem anderen Ausführungsbeispiel kann das erste Getriebeelement mehrere Arme aufweisen, die, wie oben beschrieben, ausgebildet sein können. Die Arme können z. B. sternförmig angeordnet sein bzw. Arme eines Sterns sein.

Einem weiteren Ausführungsbeispiel gemäß kann die Vorrichtung weiter eine Arretiereinrichtung zum Arretieren der Verstelleinrichtung außerhalb der Kopplungsstellung aufweisen. Mit der Arretiereinrichtung kann eine Verstellung der Position der Trägerstruktur während des Betriebs vermieden werden.

Erfindungsgemäß weist die Verstelleinrichtung mindestens einen Spindeltrieb mit einer an der Dreheinheit drehbar gelagerten Gewindespindel, die in der Kopplungsstellung mittels des ersten Getriebeelements drehbar ist, und einer mit der Trägerstruktur drehfest verbundenen Spindelmutter auf, wobei ein Außengewinde der Gewindespindel in Eingriff mit einem Innengewinde der Spindelmutter ist.

Eine Drehung der Gewindespindel bewirkt eine Verschiebung der Spindelmutter entlang der Gewindespindel. Damit wird gleichzeitig eine Verschiebung der Trägerstruktur bewirkt.

Wenn ein zweites Getriebeelement vorgesehen ist, kann die Gewindespindel unmittelbar oder über ein drittes Getriebeelement mit dem zweiten Getriebeelement verbunden sein. Das dritte Getriebeelement kann z. B. ein Zahnkranz sein, der sich um die erste Achse erstreckt.

Weiter kann die Gewindespindel parallel zur ersten Achse ausgerichtet sein. Damit kann eine Verstellung der Trägerstruktur parallel zur ersten Achse erleichtert werden.

Wenn eine Arretiereinrichtung vorgesehen ist, kann die Arretiereinrichtung die Gewindespindel arretieren, um eine Verstellung der Höhe außerhalb der Kopplungsstellung zu verhindern.

Mehrere Spindeltriebe können über den Umfang der Trägerstruktur gleichmäßig verteilt angeordnet sein.

Bei einem Ausführungsbeispiel kann vorgesehen sein, dass die Verstelleinrichtung mehrere Spindeltriebe gemäß der oben angeführten Beschreibung aufweist und die Antriebseinrichtung ein einziges erstes Getriebeelement aufweist, das in der Kopplungsstellung zum gleichzeitigen Antreiben aller Spindeltriebe ausgebildet ist, wobei alle Gewindespindeln über ein drittes Getriebeelement miteinander drehgekoppelt sind.

Das dritte Getriebeelement kann ein Zahnrad, insbesondere ein Zahnkranz oder Zahnring, sein, dessen Zähne an Zahnräder eingreifen, die an den Gewindestangen befestigt sind. Das dritte Getriebeelement kann außen- oder innenverzahnt sein und entsprechend an der Dreheinheit angeordnet sein.

Die Antriebseinrichtung kann in der Kopplungsstellung an das dritte Getriebeelement koppelbar sein, um alle Spindeltriebe gleichzeitig anzutreiben.

Einem Ausführungsbeispiel gemäß kann die Trägerstruktur einen Transportstern und/oder ein Standring für Behälter aufweisen.

Der Transportstern kann z. B. eine Vielzahl von Greifern/Klammern oder Haltern zum Halten von Behältern im Bereich der Mündung bzw. eines Hals-/Neckrings aufweisen, die über einen Umfang des Transportsterns verteilt sind.

Der Standring kann z. B. eine Vielzahl von Aufnahmen aufweisen, in oder auf denen Bodenteile von Behältern angeordnet und getragen werden können, die über einen Umfang des Standrings verteilt sind. Diese Aufnahmen können vorzugsweise als kegelstumpfförmige oder zylinderförmige Taschen ausgebildet sein.

Weiter betrifft die Erfindung eine Anlage zum Behandeln von Behältern, umfassend mindestens eine Vorrichtung zum Transport von Behältern nach der vorangegangenen Beschreibung und mindestens eine Behandlungsvorrichtung, wobei die Vorrichtung zum Transport von Behältern Behälter zu, in oder von der Behandlungsvorrichtung transportiert.

Die Behandlungsvorrichtung kann vorzugsweise als Rundläufermaschine ausgebildet sein. Bei der Behandlungsvorrichtung kann es sich z. B. um eine Füllvorrichtung, eine Sterilisationsvorrichtung, eine Inspektionsvorrichtung, eine Verschließvorrichtung oder eine Etikettiervorrichtung handeln.

Vorteile und Wirkungen sowie Weiterbildungen der Anlage ergeben sich aus den Vorteilen und Wirkungen sowie Weiterbildungen der oben beschriebenen Vorrichtung. Zur Vermeidung von Wiederholungen wird daher in dieser Hinsicht auf die vorangegangene Beschreibung verwiesen.

Weiter betrifft die Erfindung ein Verfahren zum Verstellen einer Trägerstruktur einer Vorrichtung nach der vorangegangenen Beschreibung, wobei das Verfahren zumindest folgende Schritte aufweist: Drehen der Dreheinheit um die erste Achse in die Kopplungsstellung, während das erste Getriebeelement in der Freigabestellung ist; Drehen des ersten Getriebeelements um die zweite Achse zum Verstellen der Position der Trägerstruktur durch die Verstelleinrichtung, wenn die Dreheinheit in der Kopplungsstellung ist; Drehen des ersten Getriebeelements in die Freigabestellung, wenn die gewünschte Position der Trägerstruktur erreicht wurde.

Vorteile und Wirkungen sowie Weiterbildungen des Verfahrens ergeben sich aus den Vorteilen und Wirkungen sowie Weiterbildungen der oben beschriebenen Vorrichtung. Zur Vermeidung von Wiederholungen wird daher in dieser Hinsicht auf die vorangegangene Beschreibung verwiesen.

Im Folgenden wird die Erfindung anhand beispielhafter Ausführungsformen anhand der beigefügten Zeichnung beschrieben. Es zeigen:
- Figur 1a-c: eine schematische Teil-Darstellung verschiedener Ansichten einer Vorrichtung zum Transport von Behältern;
- Figur 2a-c: eine schematische Teil-Darstellung der Dreheinheit;
- Figur 3: eine schematische Darstellung einer Anlage zum Behandeln von Behältern; und
- Figur 4: ein Flussdiagramm des Verfahrens zum Verstellen einer Trägerstruktur.

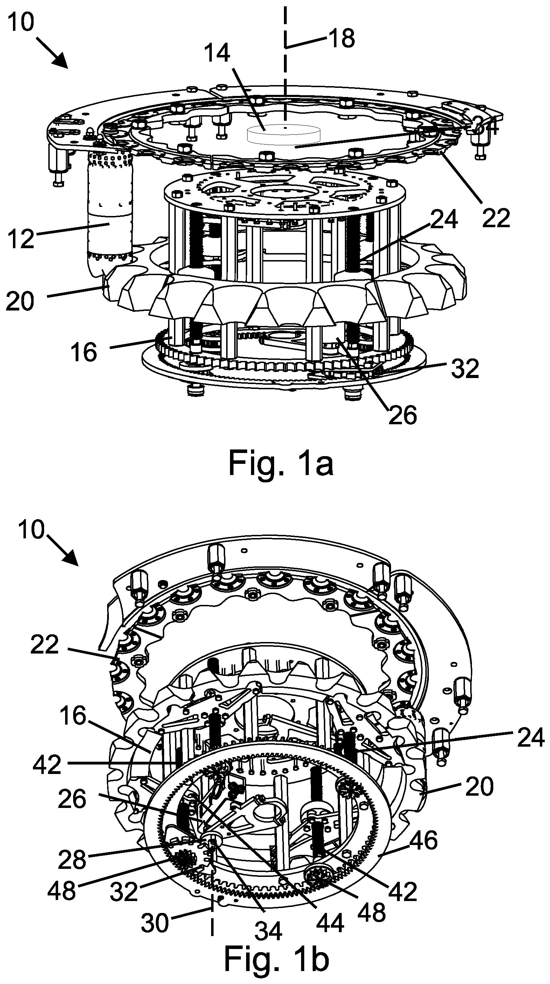

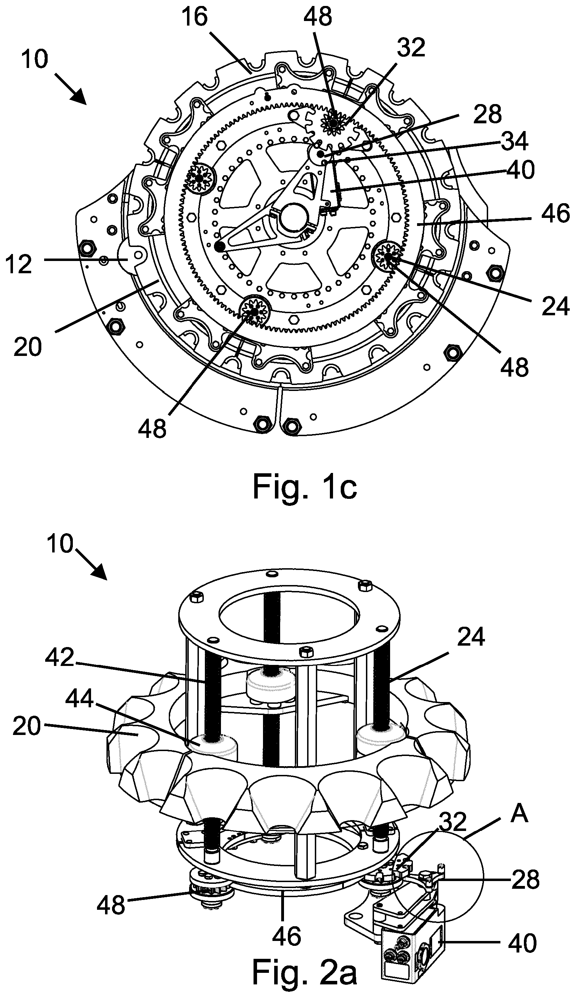

Die Vorrichtung zum Transport von Behältern wird im Folgenden in ihrer Gesamtheit mit dem Bezugszeichen 10 bezeichnet, wie in Figur 1a dargestellt.

Die Vorrichtung 10 weist eine Basiseinheit 14 und eine Dreheinheit 16 auf. Die Basiseinheit 14 ist aus Gründen der Übersichtlichkeit lediglich als flacher Zylinder dargestellt. Sie weist jedoch zumindest ein mit dem Boden verbundenes Lager auf, an dem die Dreheinheit 16 drehbar um die erste Achse 18 gelagert ist. Die Dreheinheit 16 kann damit um die erste Achse 18 und die Basiseinheit 14 gedreht werden. Dazu kann die Vorrichtung 10 einen Drehantrieb (nicht dargestellt) für die Dreheinheit 16 aufweisen.

Die Dreheinheit 16 weist mindestens eine Trägerstruktur 20, 22 auf. Trägerstruktur 20 kann als Standring ausgebildet sein, der eine Vielzahl von Aufnahmen zur Aufnahme von Bodenabschnitten von Behältern 12 aufweist. Die Aufnahmen können als kegelstumpfförmige Taschen ausgebildet sein. Jedoch können sie auch eine andere Form aufweisen. Die Form der Aufnahmen richtet sich nach der Form der Bodenabschnitte der zu haltenden Behälter 12.

Die Trägerstruktur 22 kann als Transportstern ausgebildet sein, der eine Vielzahl von Greifern, Klammern oder Haltern aufweist, mit denen Behälter 12 im Bereich der Mündung bzw. eines Hals-/Neckrings gehalten werden können.

Die Aufnahmen und die Greifer, Klammern oder Halter können vorzugsweise gleichmäßig über einen Umfang der Trägerstruktur 20, 22 verteilt angeordnet sein. Zumindest eine der Trägerstrukturen 20, 22 kann parallel zur ersten Achse 18 verstellt werden. Dazu weist die Vorrichtung 10 eine Verstelleinrichtung 24 und eine Antriebseinrichtung 26 für die Verstelleinrichtung 24 auf, wobei die Antriebseinrichtung 26 weiter ein erstes Getriebeelement 28 zum Antreiben der Verstelleinrichtung 24 aufweist. Die Antriebseinrichtung 26 und das erste Getriebeelement 28 drehen sich nicht mit der Dreheinheit 16 mit.

Mit der Verstelleinrichtung 24 kann der Abstand zwischen den beiden Trägerstrukturen 20, 22 an die Höhe der zu transportierenden Behälter 12 eingestellt werden. In diesem Beispiel kann Position der Trägerstruktur 20 entlang der ersten Achse 18 mittels der Verstelleinrichtung 24 geändert werden.

Dazu weist die Verstelleinrichtung 24, wie in Figur 1b dargestellt mindestens einen Spindeltrieb mit einer Gewindestange 42 und einer Spindelmutter 44 auf. Die Gewindestange 42 ist drehbar an der Dreheinheit 16 gelagert. Die Spindelmutter 44 ist drehfest an der Trägerstruktur 20 befestigt, wobei die Gewindestange 42 mit einem Außengewinde in ein Innengewinde der Spindelmutter 44 eingreift. Eine Drehung der Gewindestange 42 bewirkt, dass die Spindelmutter 44 mit der Trägerstruktur 20 entlang der Gewindestange 42 bewegt wird.

In dem Ausführungsbeispiel nach Figur 1a bis 1c weist die Verstelleinrichtung vier Spindeltriebe auf, die wie oben beschrieben ausgebildet sind.

Das erste Getriebeelement 28 ist um eine zweite Achse 30 drehbar ausgebildet und kann durch einen bezüglich der ersten Achse 18 und der Verstelleinrichtung 24 radial innen angeordneten Motor 40 der Antriebseinrichtung 26 angetrieben werden. Weiter ist das erste Getriebeelement 28 in diesem Ausführungsbeispiel als Triebstockantrieb ausgebildet. Dazu weist das erste Getriebeelement 28 mindestens eine Kopplungskomponente 34 in Form eines Bolzens auf, der sich von dem ersten Getriebeelement 28 parallel zur zweiten Achse 30 weg erstreckt und radial von der zweiten Achse 30 beabstandet am ersten Getriebeelement 28 befestigt ist. In diesem Ausführungsbeispiel weist das erste Getriebeelement 28 zwei Kopplungskomponenten 34 auf. Es kann jedoch auch lediglich eine Kopplungskomponente 34 vorgesehen werden.

Das erste Getriebeelement 28 ist derart ausgebildet, dass in zumindest einer Drehstellung um die zweite Achse 30 keine Kopplungskomponente 34 an die Verstelleinrichtung 24 koppeln kann. Diese mindestens eine Stellung wird als Freigabestellung bezeichnet. Wenn das erste Getriebeelement 28 beispielsweise lediglich eine Kopplungskomponente 34 aufweist, kann die Kopplungskomponente 34 bei einer Drehung des ersten Getriebeelements 28 um die zweite Achse 30 lediglich in einem ersten Drehwinkelbereich an die Verstelleinrichtung 24 koppeln. In einem zweiten Drehwinkelbereich um die zweite Achse 30 ist die Kopplungskomponente 34 von der Verstelleinrichtung 24 beabstandet angeordnet, so dass die Kopplungskomponente 34 nicht an die Verstelleinrichtung 24 koppeln kann.

Das vorliegende Ausführungsbeispiel weist mindestens zwei Freigabestellungen auf, die durch eine Drehung des ersten Getriebeelements 28 um 180° um die zweite Achse 30 gegeneinander getauscht werden können.

Bei einer Drehung des ersten Getriebeelements 28 um die zweite Achse 30 wird die Kopplungskomponente 34 abwechselnd an die Verstelleinrichtung 24 an- und abgekoppelt. Es erfolgt daher eine automatische Entkopplung der Antriebseinrichtung 26 von der Verstelleinrichtung 24.

Mindestens eine der Gewindestangen 42 der Verstelleinrichtung 24 weist ein zweites Getriebeelement 32 auf, das sich mit der Gewindestange 42 drehen kann. Das zweite Getriebeelement 32 kann als Scheibe ausgebildet sein, die über ihren Umfang verteilte Aufnahmen für die Kopplungskomponenten 34 aufweist.

Das zweite Getriebeelement 32 dreht sich mit der Dreheinheit 16 um die erste Achse 18. Bei einer Drehung der Dreheinheit 16 um die erste Achse 18 wird das zweite Getriebeelement 32 daher abwechselnd von dem ersten Getriebeelement 28 wegbewegt und zu dem ersten Getriebeelement 28 hinbewegt.

Da das erste Getriebeelement 28 sich nicht mit der Dreheinheit 16 dreht, kann das erste Getriebeelement 28 lediglich dann mit dem zweiten Getriebeelement 32 gekoppelt werden, wenn die Dreheinheit 16 eine Drehstellung aufweist, in der das zweite Getriebeelement 32 neben bzw. nah genug an dem ersten Getriebeelement 28 angeordnet ist. Diese Drehstellung der Dreheinheit 16 wird als Kopplungsstellung bezeichnet und ist in den Figuren 1a bis 1c in verschiedenen Ansichten dargestellt. In der Kopplungsstellung der Dreheinheit 16 ist die Antriebseinrichtung 26 daher mit der Verstelleinrichtung 24 koppelbar.

In der Kopplungsstellung kann durch ein Drehen des ersten Getriebeelements 28 um die zweite Achse 30 eine Drehung des zweiten Getriebeelements 32 bewirkt werden. Die Gewindestange 42 der Verstelleinrichtung 24 kann auf diese Weise angetrieben werden. Je nach Laufrichtung der Antriebseinrichtung 26 kann die Trägerstruktur 20 damit in die jeweilige Richtung entlang der Gewindestange 42 bewegt werden.

An den Gewindestangen 42 sind weiter Zahnräder 48 befestigt, die sich mit den Gewindestangen 42 drehen. Die Zahnräder 48 sind über ein drittes Getriebeelement 46 miteinander drehgekoppelt. Das dritte Getriebeelement 46 kann als ein Zahnring mit einer Innenverzahnung ausgebildet sein. Eine Drehung einer Gewindestange 42 wird über die Zahnräder 48 und das dritte Getriebeelement 46 auf die anderen Gewindestangen 42 übertragen. Die Gewindestangen 42 sind daher gleichzeitig drehbar.

Die beiden Kopplungskomponenten 34 des ersten Getriebeelements 28 gemäß Figu-ren 1a bis 1c sind in Bezug zur zweiten Achse 30 zueinander diametral gegenüber angeordnet. Es greift jeweils lediglich eine der beiden Kopplungskomponenten 34 gleichzeitig in das zweite Getriebeelement 32 ein. Weiter überlappt das zweite Getriebeelement 32 weniger als den halben Umfang des ersten Getriebeelements 28, so dass bei einer Drehung des ersten Getriebeelements 28 um die zweite Achse 30 mindestens eine Drehstellung existiert, in der keine der beiden Kopplungskomponenten 34 mit dem zweiten Getriebeelement 32 koppelt. Wenn das erste Getriebeelement 28 in dieser Freigabestellung ist, kann das zweite Getriebeelement 32 durch eine Drehung um die erste Achse 18 kollisionsfrei um die erste Achse 18 gedreht werden.

Um während der Drehung des Drehteils 16 um die erste Achse 18 ein unkontrolliertes Verstellen der Position der Trägerstruktur 20 zu vermeiden, weist die Vorrichtung 10 weiter eine in den Figuren nicht näher dargestellte Arretiereinrichtung auf. Die Arretiereinrichtung ist dazu ausgebildet, die Verstelleinrichtung 24 zu arretieren. Insbesondere verhindert die Arretiereinrichtung ein unbeabsichtigtes Drehen des zweiten Getriebeelements 32 und des damit verbundenen Zahnrades 48.

Figuren 2a bis 2c zeigen ein weiteres Ausführungsbeispiel der Vorrichtung 10.

In diesem Ausführungsbeispiel nach Figur 2a ist der Motor 40 der Antriebseinrichtung 26 in Bezug zur ersten Achse 18 radial außen zur Verstelleinrichtung 24 angeordnet.

Weiter weist die Verstelleinrichtung 24 in diesem Ausführungsbeispiel drei Spindeltriebe mit je einer Gewindestange 42 auf. Die Anzahl der Spindeltriebe kann beliebig gewählt werden.

Das erste Getriebeelement 28 ist in diesem Ausführungsbeispiel als dreiarmiger Stern ausgebildet. Jeder um die zweite Achse 30 drehbare Arm 36 erstreckt sich von der zweiten Achse 30 radial weg. An einem der zweiten Achse 30 entgegengesetzten Endstück weist jeder drehbare Arm 36 eine Kopplungskomponente 34 auf, die als Bolzen ausgebildet ist.

Die Vorrichtung 10 ist in der Kopplungsstellung dargestellt, wobei das zweite Getriebeelement 32 zu dem ersten Getriebeelement 28 gedreht ist. Eine Drehung des ersten Getriebeelements 28 bewirkt ein Antreiben der Verstelleinrichtung 24 über das zweite Getriebeelement 32.

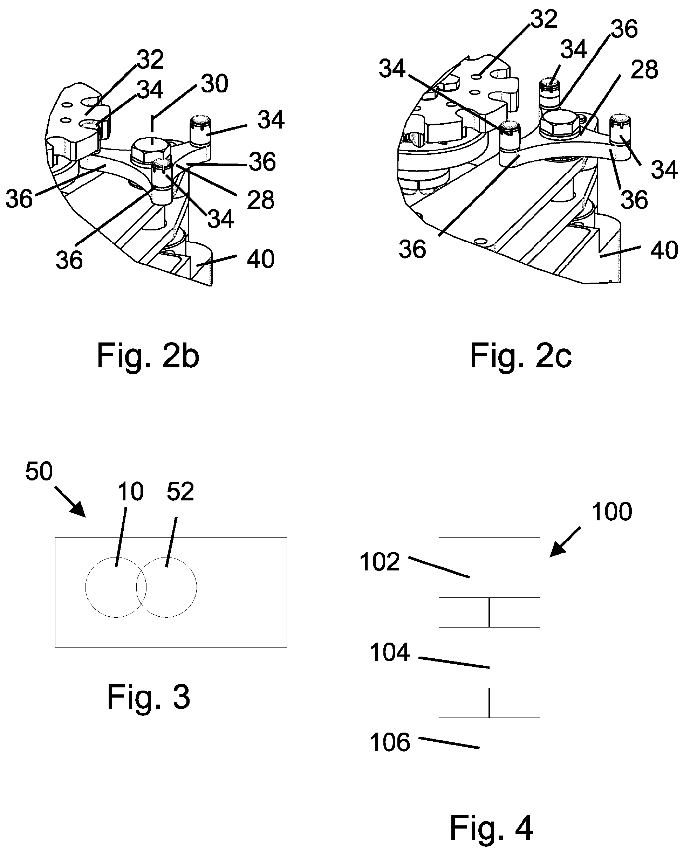

Der Kreis A aus Figur 2a wird in den Figuren 2b und 2c detaillierter dargestellt.

Gemäß Figur 2b ist das erste Getriebeelement 28 mit einem der drei Kopplungskomponenten 34 an das zweite Getriebeelement 32 gekoppelt, so dass ein Drehmoment zwischen dem ersten und zweiten Getriebeelement 28, 32 übertragen werden kann.

Das erste Getriebeelement 28 wurde dazu um die zweite Achse 30 aus der Freigabestellung gedreht.

Die Freigabestellung ist in Figur 2c dargestellt. Keine der Kopplungskomponenten 34 koppelt in der Freigabestellung an das zweite Getriebeelement 32. In diesem Ausführungsbeispiel weist das erste Getriebeelement 28 mindestens drei Freigabestellungen auf, wobei jeweils zwei der drei Kopplungskomponenten 34 aus einer Freigabestellung durch eine Drehung um die zweite Achse 30 an das zweite Getriebeelement 32 gekoppelt werden können.

In jeder Freigabestellung kann das zweite Getriebeelement 32 kollisionsfrei um die erste Achse 18 gedreht werden.

In einem weiteren Ausführungsbeispiel (nicht dargestellt) kann das erste Getriebeelement 28 als Teilzahnrad ausgebildet sein. Das Teilzahnrad kann als eine TeilScheibe mit einer Außenverzahnung ausgebildet sein. In einer Drehstellung um die zweite Achse 30 greifen keine Zähne in die Bahn der Verstelleinrichtung 24 um die erste Achse 18 ein. Dies ist dann die Freigabestellung dieses Ausführungsbeispiels.

In allen Ausführungsbeispielen kann alternativ oder zusätzlich zu der Trägerstruktur 20 die Trägerstruktur 22 durch die Verstelleinrichtung 24 verstellt werden.

In Figur 3 ist schematisch eine Anlage 50 zum Behandeln von Behältern 12 dargestellt.

Die Anlage 50 weist mindestens eine Vorrichtung 10 gemäß vorangegangener Beschreibung und mindestens eine Behandlungsvorrichtung 52 auf. Die Vorrichtung 10 transportiert Behälter 12 von oder zu der Behandlungsvorrichtung 52. Weiter kann die Vorrichtung 10 die Behälter 12 auch innerhalb der Behandlungsvorrichtung 52 transportieren.

Die Behandlungsvorrichtung 52 kann z. B. eine Füllvorrichtung, eine Sterilisationsvorrichtung, eine Inspektionsvorrichtung, eine Verschließvorrichtung oder eine Etikettiervorrichtung sein.

Die Figur 4 zeigt ein Flussdiagramm des Verfahrens 100 zum Verstellen einer Trägerstruktur 20, 22. Das Verfahren 100 wird bei einer Vorrichtung 10 gemäß vorangegangener Beschreibung angewendet, die außerhalb der Kopplungsstellung ist.

In einem ersten Schritt 102 wird die Dreheinheit 16 so weit um die erste Achse 18 gedreht, bis die Dreheinheit 16 in der Kopplungsstellung ist. Falls die Dreheinheit 16 bereits in der Kopplungsstellung sein sollte, kann der Schritt 102 übersprungen werden.

Wenn die Dreheinheit 16 in der Kopplungsstellung ist, wird das erste Getriebeelement 28 in einem Schritt 104 um die zweite Achse 30 gedreht, um die Position der Trägerstruktur 20, 22 zu verstellen. Das Verstellen erfolgt mittels der Verstelleinrichtung 24. Optional kann die Dreheinheit 16 in der Kopplungsstellung arretiert werden.

Sobald die gewünschte Position der Trägerstruktur 20, 22 erreicht wurde, wird in einem Schritt 106 das erste Getriebeelement 28 in die Freigabestellung gedreht und angehalten. Dann kann das Drehteil 16 wieder um die erste Achse 18 rotiert werden, ohne dass die Verstelleinrichtung 24 mit dem ersten Getriebeelement 28 kollidiert.

Optional kann die Verstelleinrichtung 24 nach dem Erreichen der gewünschten Position arretiert werden, um ein Verstellen aus der gewünschten Position während einer Drehung des Drehteils 16 zu vermeiden.

Die oben beschriebenen Ausführungsbeispiele dienen in keiner Weise einer Beschränkung der Erfindung. Vielmehr kann die Erfindung in vielfältiger Weise abgewandelt werden. Alle oben beschriebenen Merkmale der Erfindung können allein oder in Kombination miteinander wesentlich für die Erfindung sein.

### Bezugszeichenliste

- 10: Vorrichtung zum Transport von Behältern
- 12: Behälter
- 14: Basiseinheit
- 16: Dreheinheit
- 18: erste Achse
- 20: Trägerstruktur
- 22: Trägerstruktur
- 24: Verstelleinrichtung
- 26: Antriebseinrichtung
- 28: erstes Getriebeelement
- 30: zweite Achse
- 32: zweites Getriebeelement
- 34: Kopplungskomponente
- 36: drehbarer Arm
- 40: Motor
- 42: Gewindestange
- 44: Spindelmutter
- 46: drittes Getriebeelement
- 48: Zahnrad
- 50: Anlage zum Behandeln von Behältern
- 52: Behandlungsvorrichtung

## Patentansprüche

1. Vorrichtung (10) zum Transport von Behältern (12), umfassend eine Basiseinheit (14) und eine Dreheinheit (16), die an der Basiseinheit (14) um eine erste Achse (18) drehbar gelagert ist, wobei die Dreheinheit (16) mindestens eine Trägerstruktur (20, 22) für Behälter (12) und mindestens eine Verstelleinrichtung (24) zum Verstellen einer Position der Trägerstruktur (20, 22) parallel zur ersten Achse (18) umfasst und die Vorrichtung (10) mindestens eine Antriebseinrichtung (26) für die Verstelleinrichtung (24) aufweist,
wobei die Dreheinheit (16) bei der Drehung um die erste Achse (18) mindestens eine Kopplungsstellung aufweist, in der die Antriebseinrichtung (26) an die Verstelleinrichtung (24) koppelbar ist, wobei die Antriebseinrichtung (26) ein erstes Getriebeelement (28) zum Antreiben der Verstelleinrichtung (24) durch eine Drehung um eine zweite Achse (30) aufweist, wobei das erste Getriebeelement (28) bei dieser Drehung mindestens eine Freigabestellung umfasst, in der das erste Getriebeelement (28) bei einer Drehung der Dreheinheit (16) um die erste Achse (18) kollisionsfrei zu der Verstelleinrichtung (24) angeordnet ist, und wobei das erste Getriebeelement (28) in der Kopplungsstellung der Dreheinheit (16), außerhalb der Freigabestellung zum Antreiben der Verstelleinrichtung (24) an die Verstelleinrichtung (24) gekoppelt ist,
**dadurch gekennzeichnet, dass**
die Verstelleinrichtung (24) mindestens einen Spindeltrieb mit einer an der Dreheinheit (16) drehbar gelagerten Gewindespindel (42), die in der Kopplungsstellung mittels des ersten Getriebeelements (28) drehbar ist, und einer mit der Trägerstruktur (20, 22) drehfest verbundenen Spindelmutter (44) aufweist, wobei ein Außengewinde der Gewindespindel in Eingriff mit einem Innengewinde der Spindelmutter (44) ist.

2. Vorrichtung (10) nach Anspruch 1, **dadurch gekennzeichnet, dass** die Antriebseinrichtung (26) in Bezug zur Basiseinheit (14) ortsfest angeordnet ist.

3. Vorrichtung (10) nach Anspruch 1 oder 2, **dadurch gekennzeichnet, dass** die Verstelleinrichtung (24) ein zweites Getriebeelement (32) zum Verstellen der mindestens einen Trägerstruktur (20, 22) aufweist, wobei das erste Getriebeelement (28) in der Kopplungsstellung der Dreheinheit (16) an das zweite Getriebeelement (32) koppelbar ist und in der Freigabestellung bei einer Drehung der Dreheinheit (16) um die erste Achse (18) kollisionsfrei zu dem zweiten Getriebeelement (32) angeordnet ist.

4. Vorrichtung (10) nach einem der vorangegangenen Ansprüche, **dadurch gekennzeichnet, dass** das erste Getriebeelement (28) bezogen auf die erste Achse (18) radial weiter innen als die Verstelleinrichtung (24) angeordnet ist.

5. Vorrichtung (10) nach einem der Ansprüche 1 bis 3, **dadurch gekennzeichnet, dass** das erste Getriebeelement (28) bezogen auf die erste Achse (18) radial weiter außen als die Verstelleinrichtung (24) angeordnet ist.

6. Vorrichtung (10) nach einem der vorangegangenen Ansprüche, **dadurch gekennzeichnet, dass** das erste Getriebeelement (28) mindestens eine Kopplungskomponente (34) zum Koppeln an die Verstelleinrichtung (24) aufweist, wobei sich die Kopplungskomponente (34) von dem ersten Getriebeelement (28) weg erstreckt.

7. Vorrichtung (10) nach Anspruch 6, **dadurch gekennzeichnet, dass** das erste Getriebeelement (28) mindestens zwei Kopplungskomponenten (34) aufweist, wobei bei einer Drehung der Dreheinheit (16) um die erste Achse (18) alle Kopplungskomponenten (34) in der mindestens einen Freigabestellung kollisionsfrei zu der Verstelleinrichtung (24) angeordnet sind.

8. Vorrichtung (10) nach Anspruch 6 oder 7, **dadurch gekennzeichnet, dass** das erste Getriebeelement (28) als Teilzahnrad ausgebildet ist, wobei die mindestens eine Kopplungskomponente (34) als Zahn des Teilzahnrads ausgebildet ist, oder dass das erste Getriebeelement (28) als drehbarer Arm (36) ausgebildet ist, wobei ein Endstück des Arms (36) an der zweiten Achse (30) angeordnet ist und das gegenüberliegende Endstück des Arms (36) die Kopplungskomponente (34) aufweist.

9. Vorrichtung (10) nach einem der vorangegangenen Ansprüche, **dadurch gekennzeichnet, dass** die Vorrichtung (10) weiter eine Arretiereinrichtung zum Arretieren der Verstelleinrichtung (24) außerhalb der Kopplungsstellung aufweist.

10. Vorrichtung (10) nach einem der vorangegangenen Ansprüche, **dadurch gekennzeichnet, dass** die Verstelleinrichtung (24) mehrere Spindeltriebe gemäß einem der vorangegangenen Ansprüche aufweist und die Antriebseinrichtung (26) ein einziges erstes Getriebeelement (28) aufweist, das in der Kopplungsstellung zum gleichzeitigen Antreiben aller Spindeltriebe ausgebildet ist, wobei alle Gewindespindeln (42) über ein drittes Getriebeelement (46) miteinander drehgekoppelt sind.

11. Vorrichtung (10) nach einem der vorangegangenen Ansprüche, **dadurch gekennzeichnet, dass** die Trägerstruktur (20, 22) einen Transportstern und/oder ein Standring für Behälter (12) aufweist.

12. Anlage (50) zum Behandeln von Behältern (12), umfassend mindestens eine Vorrichtung (10) zum Transport von Behältern (12) nach einem der vorangegangenen Ansprüche und mindestens eine Behandlungsvorrichtung (52), insbesondere eine Füllvorrichtung, eine Sterilisationsvorrichtung, eine Inspektionsvorrichtung, eine Verschließvorrichtung oder eine Etikettiervorrichtung, wobei die Vorrichtung (10) Behälter (12) zu, in oder von der Behandlungsvorrichtung (52) transportiert.

13. Verfahren (100) zum Verstellen einer Trägerstruktur (20, 22) einer Vorrichtung (10) nach einem der Ansprüche 1 bis 11, wobei das Verfahren (100) zumindest folgende Schritte aufweist:
- Drehen (102) der Dreheinheit (16) um die erste Achse (18) in die Kopplungsstellung, während das erste Getriebeelement (28) in der Freigabestellung ist;
- Drehen (104) des ersten Getriebeelements (28) um die zweite Achse (30) zum Verstellen der Position der Trägerstruktur (20, 22) durch die Verstelleinrichtung (24), wenn die Dreheinheit (16) in der Kopplungsstellung ist;
- Drehen (106) des ersten Getriebeelements (28) in die Freigabestellung, wenn die gewünschte Position der Trägerstruktur (20, 22) erreicht wurde.

## Claims

1. Device (10) for transporting containers (12), comprising a base unit (14) and a rotating unit (16) which is mounted on the base unit (14) so as to be rotatable about a first axis (18), wherein the rotating unit (16) comprises at least one support structure (20, 22) for containers (12) and at least one adjustment device (24) for adjusting a position of the support structure (20, 22) parallel to the first axis (18), and the device (10) has at least one drive device (26) for the adjustment device (24), wherein the rotating unit (16) on being rotated about the first axis (18) has at least one coupling position in which the drive device (26) can be coupled to the adjustment device (24), wherein the drive device (26) has a first transmission element (28) for driving the adjustment device (24) through rotation about a second axis (30), wherein the first transmission element (28) on being so rotated has at least one release position in which the first transmission element (28), when the rotating unit (16) is rotated about the first axis (18), is arranged in a collision-free manner relative to the adjustment device (24), and wherein the first transmission element (28), with the rotating unit (16) in the coupling position, outside the release position, is coupled to the adjustment device (24) in order to drive the adjustment device (24), **characterised in that** the adjustment device (24) has at least one spindle drive with a threaded spindle (42) which is rotatably mounted on the rotating unit (16) and can be rotated in the coupled position by means of the first transmission element (28), and a spindle nut (44) which is non-rotatably connected to the support structure (20, 22), wherein an external thread of the threaded spindle is in engagement with an internal thread of the spindle nut (44).

2. Device (10) according to claim 1, **characterised in that** the drive device (26) is arranged in a fixed position relative to the base unit (14).

3. Device (10) according to claim 1 or 2, **characterised in that** the adjustment device (24) has a second transmission element (32) for adjusting the at least one support structure (20, 22), wherein the first transmission element (28), with the rotating unit (16) in the coupling position, can be coupled to the second transmission element (32), and in the release position, when the rotating unit (16) is rotated about the first axis (18), is arranged in a collision-free manner relative to the second transmission element (32).

4. Device (10) according to any of the preceding claims, **characterised in that** the first transmission element (28) is arranged radially further inwards than the adjustment device (24) in relation to the first axis (18).

5. Device (10) according to any of claims 1 to 3, **characterised in that** the first transmission element (28) is arranged radially further outwards than the adjustment device (24) in relation to the first axis (18).

6. Device (10) according to any of the preceding claims, **characterised in that** the first transmission element (28) has at least one coupling component (34) for coupling to the adjustment device (24), wherein the coupling component (34) extends away from the first transmission element (28).

7. Device (10) according to claim 6, **characterised in that** the first transmission element (28) has at least two coupling components (34), wherein, when the rotating unit (16) is rotated about the first axis (18), in the at least one release position, all coupling components (34) are arranged in a collision-free manner relative to the adjustment device (24).

8. Device (10) according to claim 6 or 7, **characterised in that** the first transmission element (28) is configured as a partial gearwheel, wherein the at least one coupling component (34) is configured as a tooth of the partial gearwheel, or **in that** the first transmission element (28) is configured as a rotatable arm (36), wherein one end piece of the arm (36) is arranged on the second axis (30) and the opposite end piece of the arm (36) comprises the coupling component (34).

9. Device (10) according to any of the preceding claims, **characterised in that** the device (10) further comprises a locking device for locking the adjustment device (24) outside the coupling position.

10. Device (10) according to any of the preceding claims, **characterised in that** the adjustment device (24) has a plurality of spindle drives according to any of the preceding claims and the drive device (26) has a single first transmission element (28) which, in the coupling position, is configured to drive all the spindle drives simultaneously, all the threaded spindles (42) being rotationally coupled to one another via a third transmission element (46).

11. Device (10) according to any of the preceding claims, **characterised in that** the support structure (20, 22) has a transport star and/or a base ring for containers (12).

12. System (50) for treating containers (12), comprising at least one device (10) for transporting containers (12) according to any of the preceding claims and at least one treatment device (52), in particular a filling device, a sterilisation device, an inspection device, a closing device or a labelling device, wherein the device (10) transports containers (12) to, into or from the treatment device (52).

13. A method (100) for adjusting a support structure (20, 22) of a device (10) according to any of claims 1 to 11, wherein the method (100) comprises at least the following steps:
- rotating (102) the rotating unit (16) about the first axis (18) into the coupling position while the first transmission element (28) is in the release position.
- rotating (104) the first transmission element (28) about the second axis (30) for adjustment of the position of the support structure (20, 22) by the adjustment device (24) when the rotating unit (16) is in the coupling position.
- rotating (106) the first transmission element (28) into the release position when the support structure (20, 22) has reached the desired position.

## Revendications

1. Dispositif (10) de transport de récipients (12) comprenant une unité de base (14) et une unité de rotation (16) qui est montée sur l'unité de base (14) de manière à pouvoir tourner autour d'un premier axe (18), dans lequel l'unité de rotation (16) comprend au moins une structure de support (20, 22) pour les récipients (12) et au moins un système de réglage (24) permettant de régler une position de la structure de support (20, 22) parallèlement au premier axe (18) et le dispositif (10) présente au moins un système d'entraînement (26) pour le système de réglage (24),
dans lequel l'unité de rotation (16) présente lors de la rotation autour du premier axe (18) au moins une position de couplage dans laquelle le système d'entraînement (26) peut être couplé au système de réglage (24), dans lequel le système d'entraînement (26) présente un premier élément de transmission (28) pour entraîner le système de réglage (24) par une rotation autour d'un deuxième axe (30), dans lequel le premier élément de transmission (28) comprend lors de cette rotation au moins une position de libération dans laquelle le premier élément de transmission (28) lors d'une rotation de l'unité de rotation (16) autour du premier axe (18) est disposé sans collision par rapport au système de réglage (24), et dans lequel le premier élément de transmission (28) est couplé au système de réglage (24) dans la position de couplage de l'unité de rotation (16) en dehors de la position de libération pour l'entraînement du système de réglage (24), **caractérisé en ce que** le système de réglage (24) présente au moins un entraînement à broche avec une broche filetée (42) montée de manière rotative sur l'unité de rotation (16), qui est rotative dans la position de couplage au moyen du premier élément de transmission (28), et un écrou de broche (44) solidaire en rotation de la structure de support (20, 22), dans lequel un filetage extérieur de la broche filetée est en prise avec un filetage intérieur de l'écrou de broche (44).

2. Dispositif (10) selon la revendication 1, **caractérisé en ce que** le système d'entraînement (26) est disposé de manière fixe par rapport à l'unité de base (14).

3. Dispositif (10) selon la revendication 1 ou 2, **caractérisé en ce que** le système de réglage (24) présente un deuxième élément de transmission (32) pour le réglage de l'au moins une structure de support (20, 22), dans lequel le premier élément de transmission (28) peut être couplé au deuxième élément de transmission (32) dans la position de couplage de l'unité de rotation (16) et est disposé sans collision par rapport au deuxième élément de transmission (32) dans la position de libération lors d'une rotation de l'unité de rotation (16) autour du premier axe (18).

4. Dispositif (10) selon l'une quelconque des revendications précédentes, **caractérisé en ce que** le premier élément de transmission (28) est disposé radialement plus à l'intérieur que le système de réglage (24) par rapport au premier axe (18).

5. Dispositif (10) selon l'une quelconque des revendications 1 à 3, **caractérisé en ce que** le premier élément de transmission (28) est disposé radialement plus à l'extérieur que le système de réglage (24) par rapport au premier axe (18).

6. Dispositif (10) selon l'une quelconque des revendications précédentes, **caractérisé en ce que** le premier élément de transmission (28) présente au moins un composant de couplage (34) pour le couplage au système de réglage (24), dans lequel le composant de couplage (34) s'étend à l'écart du premier élément de transmission (28).

7. Dispositif (10) selon la revendication 6, **caractérisé en ce que** le premier élément de transmission (28) présente au moins deux composants de couplage (34), dans lequel tous les composants de couplage (34) sont disposés sans collision par rapport au système de réglage (24) dans l'au moins une position de libération lors de la rotation de l'unité de rotation (16) autour du premier axe (18).

8. Dispositif (10) selon la revendication 6 ou 7, **caractérisé en ce que** le premier élément de transmission (28) est réalisé en tant que roue dentée partielle, dans lequel l'au moins un composant de couplage (34) est réalisé en tant que dent de la roue dentée partielle, ou que le premier élément de transmission (28) est réalisé en tant que bras rotatif (36), dans lequel une extrémité du bras (36) est disposée sur le deuxième axe (30) et l'extrémité opposée du bras (36) présente le composant de couplage (34).

9. Dispositif (10) selon l'une quelconque des revendications précédentes, **caractérisé en ce que** le dispositif (10) présente en outre un système d'arrêt pour arrêter le système de réglage (24) en dehors de la position de couplage.

10. Dispositif (10) selon l'une quelconque des revendications précédentes, **caractérisé en ce que** le système de réglage (24) présente plusieurs entraînements à broche selon l'une quelconque des revendications précédentes et le système d'entraînement (26) présente un seul premier élément de transmission (28) qui est réalisé dans la position de couplage pour entraîner simultanément tous les entraînements à broche, dans lequel toutes les broches filetées (42) sont couplées entre elles en rotation par un troisième élément de transmission (46).

11. Dispositif (10) selon l'une quelconque des revendications précédentes, **caractérisé en ce que** la structure de support (20, 22) présente une étoile de transport et/ou une bague de support pour les récipients (12).

12. Installation (50) de traitement de récipients (12) comprenant au moins un dispositif (10) de transport de récipients (12) selon l'une quelconque des revendications précédentes et au moins un dispositif de traitement (52), notamment un dispositif de remplissage, un dispositif de stérilisation, un dispositif d'inspection, un dispositif de fermeture ou un dispositif d'étiquetage, dans lequel le dispositif (10) transporte les récipients (12) vers, dans ou depuis le dispositif de traitement (52).

13. Procédé (100) de réglage d'une structure de support (20, 22) d'un dispositif (10) selon l'une quelconque des revendications 1 à 11, dans lequel le procédé (100) présente au moins les étapes suivantes :
- la rotation (102) de l'unité de rotation (16) autour du premier axe (18) dans la position de couplage, tandis que le premier élément de transmission (28) est en position de libération ;
- la rotation (104) du premier élément de transmission (28) autour du deuxième axe (30) pour régler la position de la structure de support (20, 22) à l'aide du système de réglage (24) lorsque l'unité de rotation (16) est en position de couplage ;
- la rotation (106) du premier élément de transmission (28) dans la position de libération lorsque la position souhaitée de la structure de support (20, 22) a été atteinte.
